# EUROPEAN PATENT APPLICATION

(11) **EP 2 551 376 A1**
(43) Date of publication of application: **30.01.2013**
(21) Application number: 11759588.4
(22) Date of filing: 25.03.2011
(51) Int. Cl.: C23C 24/08, B23K 20/12, B23K 26/34

(54) **METHOD FOR FORMING METAL MEMBRANE**

(30) Priority: 25.03.2010 JP 2010070680
(71) Applicant: Osaka Municipal Technical Research Institute, Osaka-shi, Osaka 536-8553 (JP); Kabushikikaisha Amc, Osaka 551-0031 (JP); Osaka University, Suita-shi Osaka 565-0871 (JP)
(72) Inventor: MORISADA, Yoshiaki, Osaka-Shi Osaka 536-8553 (JP); FUKUZUMI, Masao, Osaka-Shi Osaka 536-8553 (JP); NAGAOKA, Toru, Osaka-Shi Osaka 536-8553 (JP); MIZUNO, Tadashi, Osaka-Shi Osaka 551-0031 (JP); ABE, Genryu, Osaka-Shi Osaka 551-0031 (JP); FUJII, Hidetoshi, Suita-Shi Osaka 565-0871 (JP)
(74) Representative: Plougmann & Vingtoft A/S
(86) International application number: PCT/JP2011/057394
(87) International publication number: WO 2011/118784

(57) **Abstract**

[Problem] The present invention provides a method of forming a metal coating having a microstructure as well as a structural member having a metal coating formed by the method. In particular, the invention provides an advantageous method of forming a metal coating in which minute carbides are uniformly dispersed.

[Means for Solving the Problem] The method of forming a metal coating of the present invention has: a first step of cladding a surface of the substrate with metal powder by laser cladding method; and a second step of forming the metal coating having a microstructure by applying a friction stir processing to the cladded region.

## Description

### [Technical Field]

The present invention relates to a method of forming a metal coating having a microstructure and a structural member having the metal coating formed by the method. In particular, the invention relates to an advantageous method of forming a metal coating in which fine carbides are uniformly dispersed. The term "microstructure" in the present invention means a structure in which base material has a crystal grain size of 5µm or less and carbides have a grain size of 1µm or less and the carbides are uniformly dispersed in the base material.

### [Background Art]

It has been known that metal material has mechanical characteristics (e.g., hardness, strength) that are significantly influenced by the structure of the metal material. Thus, the finer the structure of the metal material is, the more improved the mechanical characteristics generally become. Thus, metal material (e.g., tool steel, stellite), which is used for various tools, blades, or metal molds and which is required to have high mechanical characteristics, is composed to contain carbides having high hardness such as chromium carbide and vanadium carbide dispersed in the base material. In order to refine the structure of the metal material, the base material is desired to have not only fine crystal grains but also have fine carbides.

The inventors have suggested a method in which a steel material such as tool steel is subjected to a laser processing and a friction stirring process to refine the structure of the steel material (Non-patent document 1). According to this method, the crystal grains of the base material and the carbide can be refined in an arbitrary surface region of a steel material (plate member). The refined carbides are not unevenly dispersed, and a favorable structure in which the carbides are uniformly dispersed in the base material can be obtained.

On the other hand, tool steel and stellite are high-cost material containing a large amount of scarce elements. Furthermore, from the viewpoint of providing a member having a lower price and a sustainable industry development, such metal materials have been desired to be used in a smaller amount. Thus, various techniques of covering the surface of a base material with such metal materials have been considered (e.g., Patent document 1 and Non-patent document 2).

### [Prior Art Publication]

### [Patent Documents]

Patent document 1: Japanese Laid-Open Publication No. H9-314364

### [Non-patent Document]

Non-patent document 1: Nanostructured Tool Steel Fabricated by Combination of Laser Melting and Friction Stir Processing, Mater. Sci. Eng. A, 505 (2009) 157-162.
Non-patent document 2: "Laser Cladding", Published in 2005 by CRC Press LLC.

### [Summary of the Invention]

### [Problem to be Solved by the Invention]

The method already suggested by the inventors (Non-patent document 1) is a method of refining the structure of the surface of a metal plate member, and this method is not so effective to reduce the amount of tool steel or the like to be used. Furthermore, carbides are allowed to have microstructures of different levels. Thus, if a material to be processed contains vanadium carbide, a problem has been caused in which vanadium carbides of a few µm are left even after a processing for refining the structure.

Furthermore, when a substrate is covered with a material such as tool steel and stellite containing a high amount of carbides by a conventional method such as TIG welding, the resulting coating layer becomes a rapidly-solidified structure that is an uneven structure in which the carbides are unevenly dispersed in the crystal grain boundary of the base material. Such a structure has been known to cause a brittle coating layer, which is a significant problem.

The present invention has been devised in view of the problem as described above, and it is an objective of the invention to provide a metal coating having a microstructure as well as a structural member having the metal coating formed by the method. In particular, the invention provides an effective method of forming a metal coating in which fine carbides are uniformly dispersed.

### [Means for Solving the Problem]

A method of forming a metal coating of the present invention includes: the first step of cladding a surface of a substrate with metal powders by a laser cladding; and the second step of forming the metal coating having a microstructure by applying a friction stir processing to the cladded region. When the metal powders contain chromium carbide in particular, a metal coating having a microstructure can be formed easily. Even when the metal powders contain vanadium carbide, a metal coating having a microstructure can be formed.

In the method of forming a metal coating of the present invention, laser cladding is preferably conducted along an equivalent axis on which the supply of the metal powders and the laser emission are performed. For example, by moving a cladding torch capable of supplying the metal powders to the surface of the substrate and the laser emission along an equivalent axis by a position control robot, the metal powders can be cladded on an arbitrary region of the surface of the substrate.

A structural member of the present invention can be manufactured by a method of forming a metal coating of the present invention. The structural member of the present invention is obtained by forming a metal coating having a microstructure on the surfaces of various substrates. The use of the metal coating can provide superior mechanical characteristics such as high hardness. The metal coating preferably contains chromium carbide and more preferably contains vanadium carbide.

### [Effect of the Invention]

A method of forming a metal coating of the present invention can form a metal coating having a microstructure on a surface of a substrate. Regardless of the type of carbides, carbides contained in a metal material can be refined to a size of 1µm or less and the carbides can be uniformly dispersed in the base material.

The structural member of the present invention is configured such that a surface of a substrate has a metal coating having a microstructure formed thereon. Thus, when compared with a structural member composed of general metal material, the structural member of the present invention has superior mechanical characteristics (e.g., high hardness). Furthermore, because carbides are finely refined, the influence on the surface shape of the structural member by the dropout of the carbide is fairly minimal. The structural member of the present invention can be widely used for applications requiring high hardness, high toughness, high abrasion resistance characteristics and the like, and can be used for various blades and rolling dies, for example.

### [Brief Description of the Drawings]

Fig. 1 shows a photograph showing the appearance of one example of a laser cladding apparatus that can be used in a method of forming a metal coating of the present invention.
Fig. 2 is a schematic cross-sectional view illustrating a laser cladding torch that can be used in the method of forming a metal coating of the present invention.
Fig. 3 is a schematic cross-sectional view illustrating a member obtained in the first step in the method of forming a metal coating of the present invention.
Fig. 4 is a schematic cross-sectional view illustrating a structural member having a metal coating of the present invention.
Fig. 5 shows a photograph showing the structure of a sample obtained in Comparison Example 1.
Fig. 6 shows a photograph showing the structure of a sample obtained in the first step of Embodiment 1.
Fig. 7 is a TEM photograph of a metal coating having a microstructure of a sample obtained in Embodiment 1.
Fig. 8 shows a photograph showing the appearance of a sample obtained in the first step of Embodiment 2.
Fig. 9 is a TEM photograph of a cladded portion of the sample obtained in the first step of Embodiment 2.
Fig. 10 is a TEM photograph of a metal coating having a microstructure of the sample obtained in Embodiment 2.
Fig. 11 illustrates Vickers hardness of the sample obtained in Embodiment 2.
Fig. 12 is a SEM photograph of a friction stirring process section of the sample obtained in Comparison Example 2.

### [Embodiment for Carrying Out the Invention]

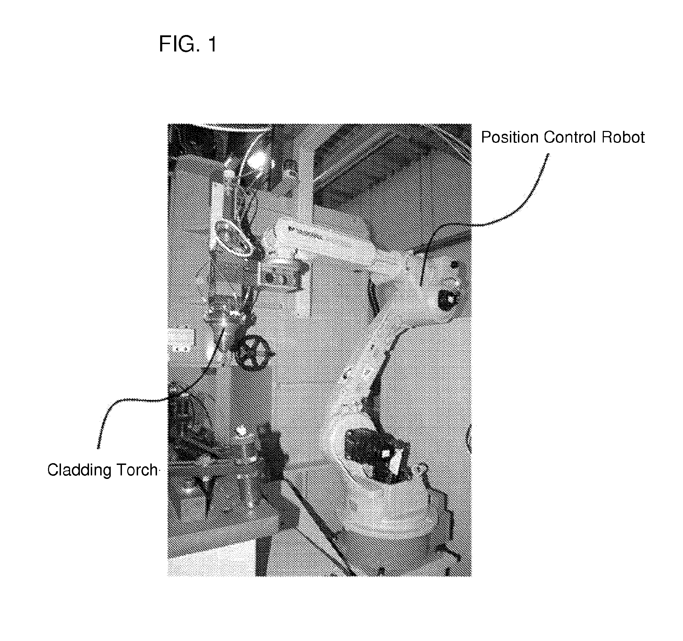

The method of forming a metal coating of the present invention includes: the first step of cladding a surface of a substrate with metal powders by a laser cladding; and the second step of forming the metal coating having a microstructure by applying a friction stir processing to the cladded region. Fig. 1 shows one example of a laser cladding apparatus that can be used in the first step. This apparatus includes a cladding torch that can supply metal powders as material for the cladding process to the surface of a substrate and that can emit laser to the surface of the substrate to which the metal powders are supplied. The cladding torch is retained by a position control robot.

After the metal powders supplied to the surface of the substrate are melted by the laser emission, the metal powders melted along the move of the laser are rapidly-solidified on the surface of the substrate, thereby forming a cladded portion. The position control robot can be used to move the cladding torch to form the cladded portion on an arbitrary region on the surface of the substrate. Alternatively, the position of the cladding torch may be fixed and the substrate may be moved by an XY stage or the like to form the cladded portion in a similar manner as above. The formation of a cladded portion does not always require an exclusive torch designed for a cladding process, and any apparatus can be used as long as the apparatus can supply metal powders to a surface of a substrate and can emit laser. Cladding can also be achieved by using wires as a material and melting the wires.

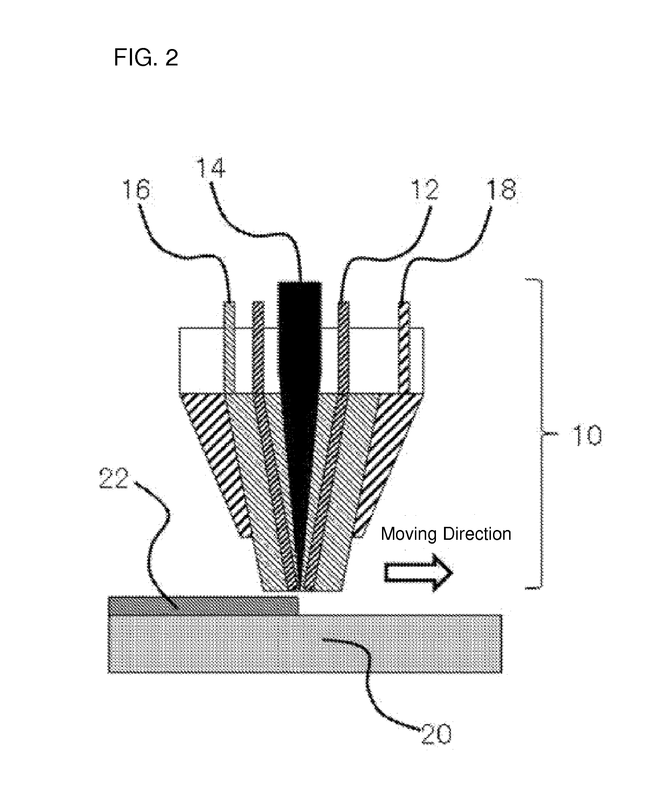

The method of supplying metal powders to a surface of a substrate and the laser emission method are not particularly limited. However, from the viewpoint of efficiently forming a cladded portion of an arbitrary shape having fine carbides, the supply of the metal powders and the laser emission are preferably carried out along the equivalent axis. Fig. 2 is a schematic cross-sectional view illustrating a laser cladding torch as an example of an apparatus that can perform the supply of the metal powders to a surface of a substrate and the laser emission along the equivalent axis. The laser cladding torch 10 has: a metal powder supply path 12; a shielding gas circulation path 16; and a cooling water circulation path 18.

The metal powders discharged from the metal powder supply path 12 are supplied to the surface of the substrate 20. Then, laser 14 is emitted to the surface of the substrate 20 that has received the metal powders, thereby forming a cladded portion 22. The shielding gas such as argon gas supplied from the shielding gas circulation path 16 suppresses oxidation of the cladded portion 22 and the periphery thereof. The cooling water circulating in the cooling water circulation path 18 suppresses the excessive heating of the laser cladding torch 10 due to the laser emission. The laser 14 may be any type of laser including, for example, semiconductor laser, YAG laser, fiber laser, or CO2 laser.

The metal powders preferably contain chromium carbide and more preferably contain vanadium carbide. If a laser cladding is performed using chromium carbide-containing metal powders as material, the resulting cladded portion 22 has a structure in which chromium carbides having a reduced size up to about 1µm are unevenly dispersed in the crystal grain boundary of the base material. The second step subjects the cladded portion 22 to a friction stirring process to break and uniformly disperse the chromium carbides, thereby forming a metal coating having a microstructure. Here, the chromium carbides dispersed in the base material also provides an effect of promoting the size reduction of the crystal grain of the base material through the friction stirring process. Specifically, the existence of the chromium carbides increases the distortion introduced in the base material by the friction stirring process and also suppresses, by the flux pinning, coarsening of the crystal grains of the base material that have been finely refined through recrystallization.

Vanadium carbides also provide the similar function as that provided by the above-described chromium carbide. However, vanadium carbide has higher hardness than chromium carbide, and thus significantly improves the mechanical characteristics of the finally-resulting metal coating having microstructure. Although refining vanadium carbide is very difficult, the use of a laser cladding can provide vanadium carbide refined to a size of about 1µm or less.

The friction stirring process is method obtained by applying the friction stirring bonding method, which is a bonding technology suggested by TWI (The Welding Institute) of U.K. in 1991, to a method for the surface modification of metal material. The friction stirring bonding is carried out by pressing a cylindrical tool rotating at a high speed into a region to be bonded (the bottom face of the tool has a projection called a probe and the probe is pressed into the region). Then, the material to be bonded that has become softer by friction heat is scanned in a direction along which the bonding is desired while the material is being stirred to thereby achieve the bonding. The region stirred by the rotating tool is generally called a stirring section. Some bonding conditions provide improved mechanical characteristics achieved by homogeneous material and a reduced grain size. Thus, the friction stirring process is a technique that uses the improved mechanical characteristics provided by homogeneous material and a reduced grain size by the friction stirring as surface modification. The friction stirring process has been actively studied in recent years. In the present invention, a probe is not always required at the bottom face of the tool for the friction stirring process, and a so-called flat tool not having a probe can also be used.

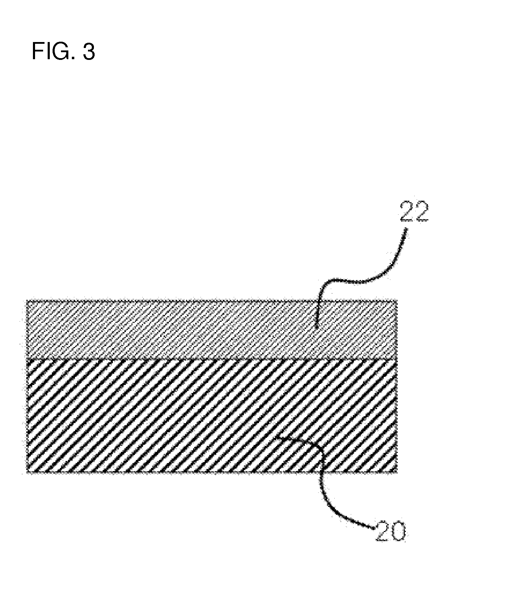

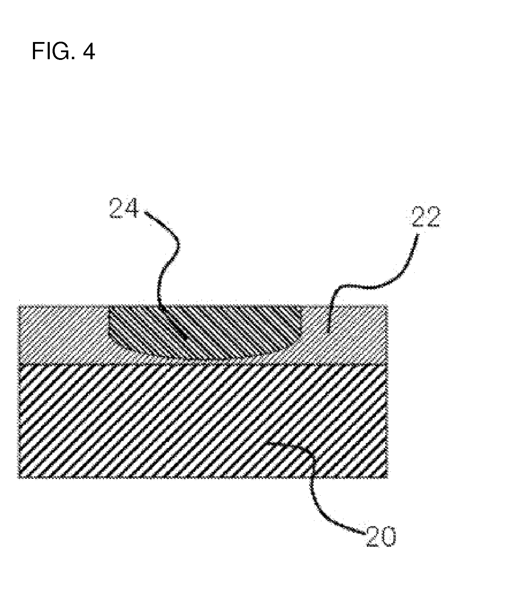

Fig. 3 is a schematic cross-sectional view illustrating the member obtained in the first step of the method of forming a metal coating of the present invention. The surface of the substrate 20 has a cladded portion 22 thereon. The substrate 20 is bonded to the cladded portion 22 in a metallurgical manner. Fig. 4 is a schematic cross-sectional view illustrating a structural member having the metal coating of the present invention. By subjecting the cladded portion 22 to a friction stirring process, a metal coating 24 having a microstructure is formed. The tool used for the friction stirring process preferably does not reach the substrate 20. The cladded portion 22 is bonded to the metal coating 24 having a microstructure in a metallurgical manner.

### [Embodiment]

The following sections will describe embodiments and comparison examples of the present invention with reference to the drawings. However, the present invention is not limited to these embodiments.

### Comparison Example 1 (formation of cladded portion (stellite layer) by TIG welding)

Wires of stellite 6 (diameter: 2.0mm) were used as a source material to subject the surface of the SKD 11 substrate to a TIG welding by a DC welding machine having a rated current of 300A. During the TIG welding, argon gas was allowed to flow as a shielding gas and a cladded portion was formed under the conditions of the voltage of 10V, the current of 100A, and the traveling speed of 50mm/min.

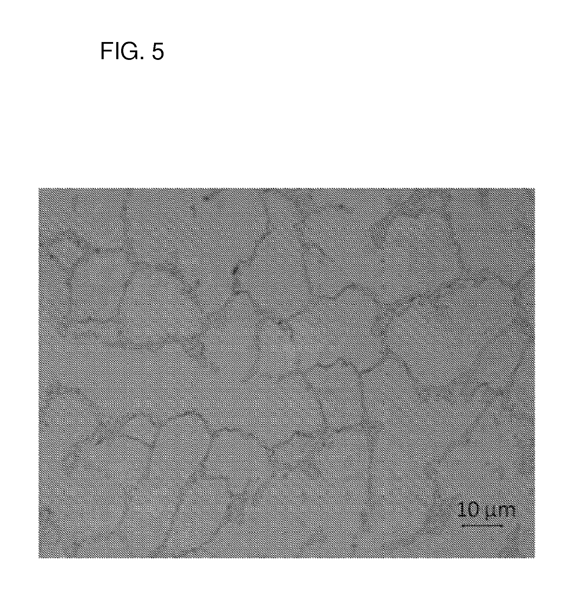

Fig. 5 shows a photograph showing the structure of the resultant cladded portion. The resultant cladded portion has a typical structure obtained by rapidly-solidifying stellite in which the crystal grains of the base material are surrounded by the network of chromium carbides. It can be observed that melted stellite grains are cooled at a relatively-low speed and thus the chromium carbides have a grain size of a few µm.

### Embodiment 1 (formation of metal coating using stellite powders)

The surface of the SKD 11 substrate was subjected to a laser cladding using stellite powders (stellite No.6 made by Mitsubishi Materials Corporation) having a grain size of about 20µm (the first step in the method of forming a metal coating of the present invention). The laser cladding was performed by the laser cladding apparatus shown in Fig. 1 and Fig. 2, and the stellite powders and the surface of the substrate were heated by a 1000W semiconductor laser. During cladding, argon gas was allowed to flow as a shielding gas and the cladding torch was moved at a traveling speed of 1000mm/min.

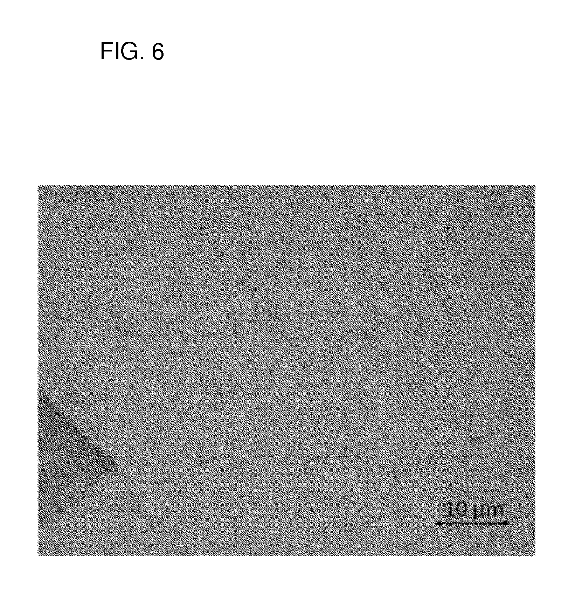

Fig. 6 shows a photograph showing the structure of the resulting cladded portion (stellite layer). The resulting cladded portion has a typical rapidly-solidified structure, but this resulting cladded portion has a finer structure because this portion was cooled at a higher speed than the case of the TIG welding. It can be observed that, although chromium carbides are unevenly dispersed in the crystal grain boundary of the base material, the individual grains have a size reduced to about 1µm or less.

The cladded portion (stellite layer) formed on the surface of the SKD 11 substrate was subjected to the friction stirring process (the second step in the method of forming a metal coating of the present invention). The friction stirring process was performed by a cylindrical tool of cemented carbide under the conditions of the tool rotation rate of 400rpm, the tool traveling speed of 1000mm/min, and the tool press-in load of 3.8t. During cladding, argon gas was allowed to flow as a shielding gas.

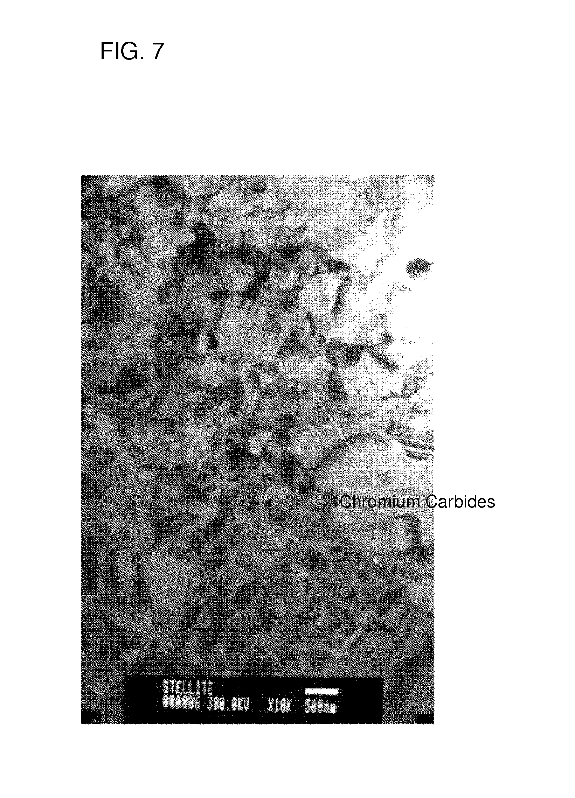

Fig. 7 shows a TEM photograph of a region subjected to the friction stirring process. Chromium carbides having a size of 1µm or more were not observed, and most chromium carbides had a reduced size up to 500nm. Chromium carbides were uniformly dispersed and the base material clearly had a grain size of 5µm or less.

### Embodiment 2 (formation of metal coating using SPC5 powders)

By using SPC5 powders having a grain size of about 20µm (made by Sanyo Special Steel Co., Ltd.: SPC5 is powders obtained by adding 5 mass% vanadium to SUS440C and includes chromium carbide and vanadium carbide) as a material, the surface of the SKD 11 substrate was subjected to a laser cladding (the first step in the method of forming a metal coating of the present invention). The laser cladding was performed by the laser cladding apparatus shown in Fig. 1 and Fig. 2. The stellite powders and the surface of the substrate were heated by a 1000W semiconductor laser. During cladding, argon gas was allowed to flow as a shielding gas and the cladding torch was moved at a traveling speed of 1000mm/min.

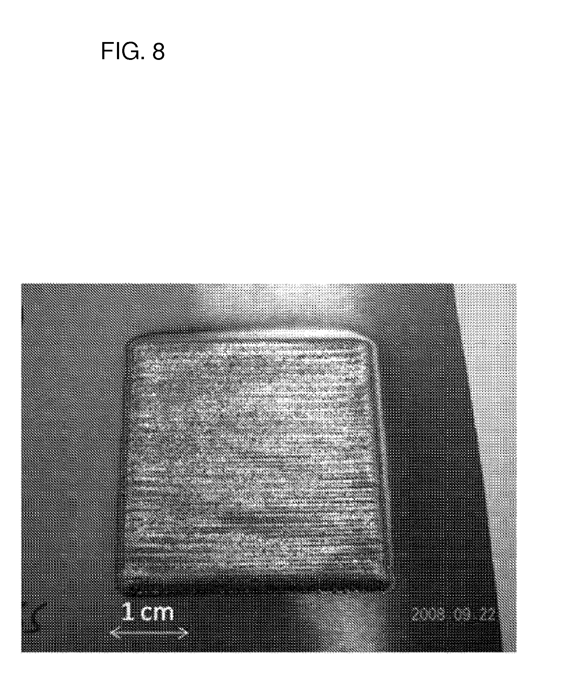

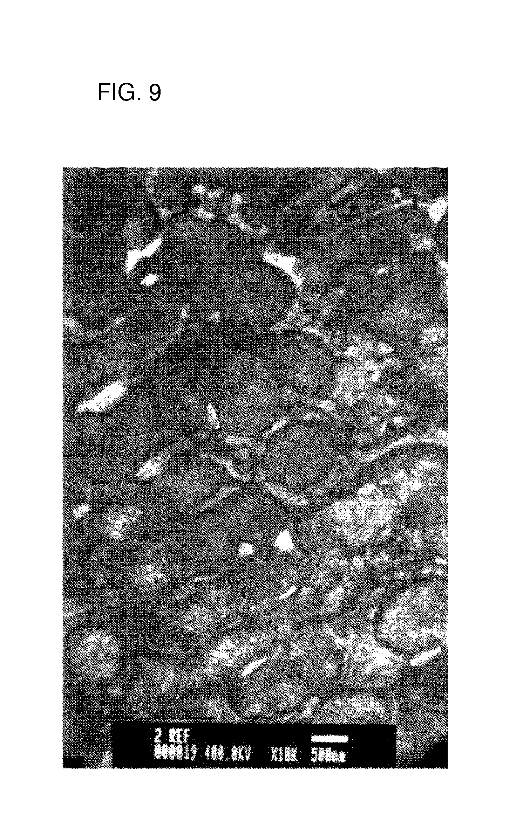

Fig. 8 shows a photograph of the appearance of the resultant sample. It can be observed that a favorable cladded portion (SPC5 layer) is formed on the surface of the SKD 11 substrate. Fig. 9 shows a TEM photograph showing the cladded portion (SPC5 layer). It can be observed that carbides are crystallized at the crystal grain boundary of the base material having a grain size of about 1µm. The result of the STEM-EDS analysis showed that the carbides are chromium carbide and vanadium carbide. The chromium carbide and vanadium carbide both have a size of 1 µm or less.

The cladded portion (SPC5 layer) formed on the surface of the SKD 11 substrate was subjected to the friction stirring process (the second step in the method of forming a metal coating of the present invention). The friction stirring process was performed by a cylindrical tool of cemented carbide under the conditions of the tool rotation rate of 400rpm, the tool traveling speed of 1000mm/min, and the tool press-in load of 3.8t. During cladding, argon gas was allowed to flow as a shielding gas.

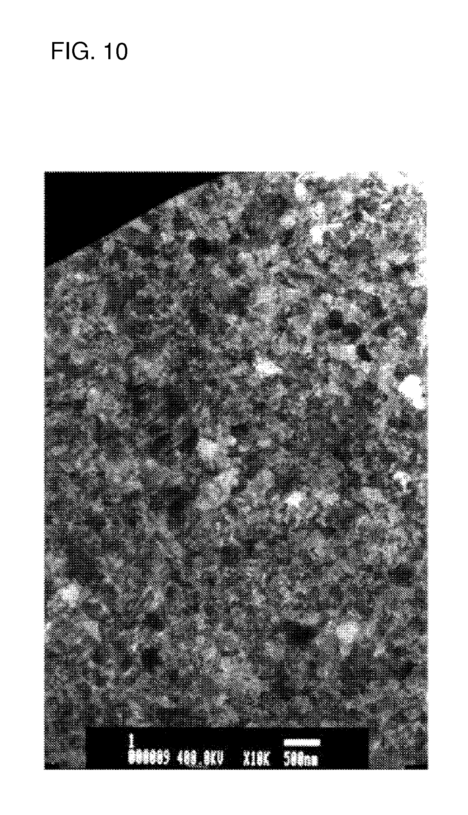

Fig. 10 shows a TEM photograph showing the region subjected to the friction stirring process. As shown in the photograph, no chromium carbide or vanadium carbide having a size of 1µm or more was observed and most carbides had a reduced size of up to 500nm. The carbides were uniformly dispersed and the base material clearly had a grain size of 5µm or less.

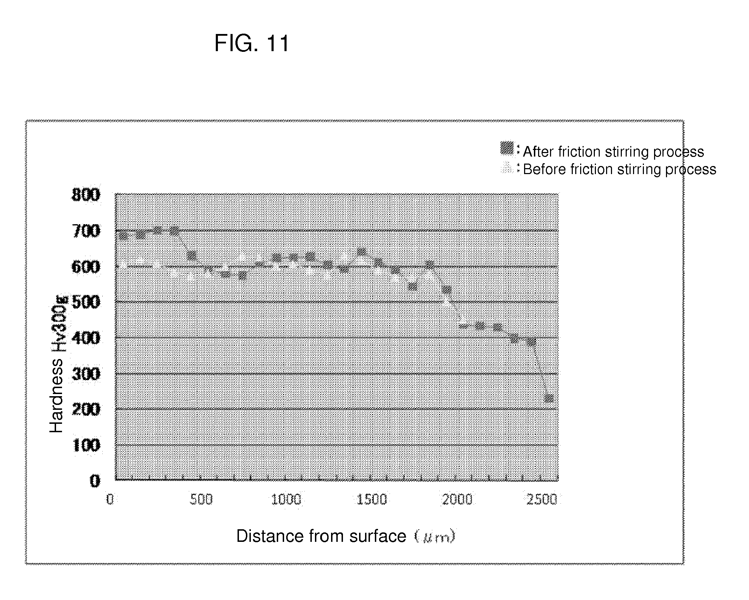

Fig. 11 shows the hardness profile of the sample before and after the friction stirring (a depth direction from the surface of the cladded portion). A region at a depth of about 500µm from the surface of the cladded portion was influenced by the friction stirring, and the region showed hardness higher by about 100HV as compared to the hardness before the friction stirring process.

### Comparison Example 2 (structural refinement of SPC5 by laser processing and friction stirring process to plate member)

The inventors have already suggested a method of refining the structure of a metal material by combining a laser processing with a friction stirring process. In order to clarify the difference between this method and the present invention, structural refinement was tried by subjecting an SPC5 plate member to a laser processing and a friction stirring process.

The SPC5 plate member was subjected to semiconductor laser (output: 1kW) to form a laser processing region. The laser was just focused on the surface of the SPC5 plate member (the laser diameter at the surface of the SPC5 plate member was about 1mm) with the laser scanning speed of 1000mm/min. In order to allow laser processing regions formed by a single laser scanning to be at least partially superposed, the laser emission position was moved by 0.7mm in the direction vertical to the laser scanning direction after the completion of every one laser scanning, thereby performing the total of 15 laser scannings.

The friction stirring process was performed by a cemented carbide tool having a cylindrical shape of a diameter of 10mm. The tool rotating at the speed of 400rpm was pressed into the laser processing region at a load of 3800kg. The tool was moved at a traveling speed of 400mm/min, and argon gas was allowed to flow to prevent the oxidation of the tool and the sample. The tool was inserted at a center of the laser processing region, and much attention was paid so as not to allow the tool to agitate a SPC5 plate member, which is not yet processed.

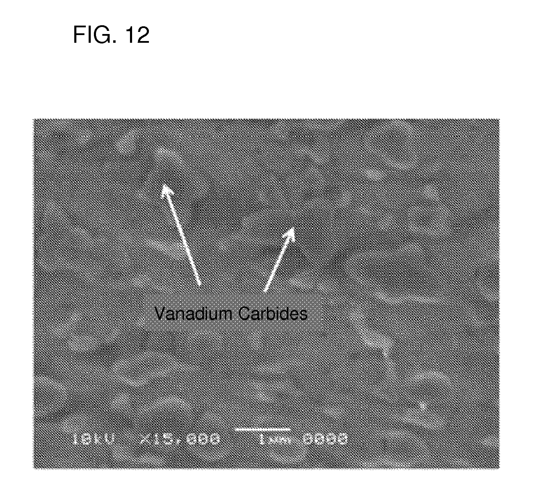

Fig. 12 shows a SEM photograph showing the friction stirring process section. It can be observed that there are a large number of vanadium carbides having a size of a few µm and that no SPC5 in which the structure is sufficiently refined was obtained. As described above, the use of the present invention provides vanadium carbides having a grain size of 1µm or less. Thus, when the present invention is compared with the SPC5 obtained by subjecting the plate member to the laser emission and the friction stirring process, the present invention provides vanadium carbides having a different grain size.

### [Description of Reference Numerals]

- 10: Laser cladding torch
- 12: Metal powder supply path
- 14: Laser
- 16: Shielding gas circulation path
- 18: Cooling water circulation path
- 20: Substrate
- 22: Cladded portion
- 24: Metal coating having microstructure

## Claims

1. A method of forming a metal coating on a substrate, comprising the steps of:
cladding a surface of the substrate with a metal powder by laser cladding method; and
forming the metal coating comprising a microstructure by applying a friction stir processing to the cladded region of the substrate.

2. The method of claim 1, wherein the metal powder comprises a chromium carbide.

3. The method of any one of claims 1 to 2, wherein the metal powder comprises a vanadium carbide.

4. The method of any one of claims 1 to 3, wherein the laser cladding is conducted by supplying the metal powder and emitting the laser along an equivalent axis.

5. A structural member comprising a metal coating formed by the method of any one of claims 1 to 4.
